# EUROPÄISCHE PATENTANMELDUNG

(11) **EP 4 524 493 A1**
(43) Veröffentlichungstag der Anmeldung: **19.03.2025**
(21) Anmeldenummer: 23197670.5
(22) Anmeldetag: 15.09.2023
(51) Int. Cl.: F24S 25/11, F24S 40/80

(54) **AUFSTELLER ZUR AUFSTELLUNG VON WENIGSTENS EINEM SOLARMODUL AUF EINEM UNTERGRUND UND VERFAHREN ZUR ANORDNUNG VON WENIGSTENS EINEM SOLARMODUL AN EINEM SOLCHEN AUFSTELLER**

(71) Anmelder: Solardirekt Systems GmbH, 48431 Rheine (DE)
(72) Erfinder: BRINKMANN, Manfred, 48431 Rheine (DE)
(74) Vertreter: Berkenbrink, Kai-Oliver

(57) **Zusammenfassung**

Aufsteller (1) zur Aufstellung von wenigstens einem Solarmodul auf einem Untergrund (U), wobei der Aufsteller (1) einen Boden (2), der flächig auf einen ebenen Untergrund (U) auflegbar ist, eine erste Seitenwand (7), die 1.2.1 entlang einer ersten Außenkante (3) der Boden verläuft, und eine zweite Seitenwand (8), die entlang einer zweiten Außenkante (4) der boden verläuft, wobei der erste Abschnitt (7.1) der ersten Seitenwand (7) sich in einem Winkel im Bereich von 80 bis 100° vom Boden (2) weg erstreckt.

Verfahren zur Anordnung von wenigstens einem Solarmodul an einem solchen Aufsteller.

## Beschreibung

Die Erfindung betrifft einen Aufsteller zur Aufstellung von wenigstens einem Solarmodul auf einem Untergrund sowie ein Verfahren zur Anordnung von wenigstens einem Solarmodul an einem solchen Aufsteller.

Ein Solarmodul, das auch als Photovoltaikmodul oder Solarpaneel bezeichnet wird, wandelt das Licht der Sonne in elektrische Energie um. Das Modul umfasst Solarzellen, die zwischen Platten eingebettet sind, wobei eine der Platten transparent für das Licht der Sonne ist, so dass das Licht der Sonne durch diese Platte auf die Solarzellen fallen kann. Die Solarzellen und die Platten sind von einem Metallrahmen mit einer rechteckigen Außenkontur umfasst. Ein Solarmodul weist damit die Form einer Platte mit einer rechteckigen Außenkontur auf. Damit liegen sich jeweils zwei der Außenkanten des Solarmoduls parallel gegenüber.

Zur Aufstellung solcher Solarmodule auf einem Untergrund werden sogenannte Aufsteller verwendet, die teilweise auch als Aufständerung, Montagesystem oder Halterung für Solarmodule bezeichnet werden. Ein oder mehrere Solarmodule sind an einem solchen Aufsteller anordenbar und über den Aufsteller auf einem Untergrund aufstellbar. Bevorzugt sind Solarmodule in einer schrägen Ausrichtung zum Untergrund an dem Aufsteller anordenbar, so dass das Solarmodul in einem vorteilhaften Winkel zur Sonne ausrichtbar ist. Um die Standsicherheit des Aufstellers, insbesondere bei Windlast, zu vermeiden, kann der Aufsteller über Beschwerungsmittel beschwert oder am Untergrund befestigbar sein.

Bekannt sind solche Aufsteller auch in Form wannenförmigen Kunststoffformteilen. Solche wannenförmige Kunststoffformteile haben insbesondere den Vorteil einer einfachen Herstellung und Aufstellung auf einem Untergrund.

Grundsätzlich haben sich solche Aufsteller, insbesondere auch in Form von Kunststoffformteilen, zur Anordnung von Solarmodulen bewährt. Aufgrund des häufig geringen Gewichts von Aufstellern, insbesondere soweit diese in Form von Kunststoffformteilen vorliegen, hat sich jedoch die Windlast als eine Herausforderung herausgestellt. So kann es bei den aus dem Stand der Technik bekannten Aufstellern bei angreifendem Wind zu Sogeffekten kommen, die die Standsicherheit der Aufsteller gefährden können.

Der Erfindung liegt die Aufgabe zugrunde, einen Aufsteller zur Aufstellung von wenigstens einem Solarmodul auf einem Untergrund zur Verfügung zu stellen, dessen Standsicherheit bei Windlast verbessert ist. Insbesondere liegt der Erfindung die Aufgabe zugrunde, einen solchen Aufsteller zur Verfügung zu stellen, dessen Standsicherheit bei Windlast auch dann ausreichend beziehungsweise gegenüber den Aufstellern gemäß dem Stand der Technik verbessert ist, soweit dieser als Kunststoffformteil ausgebildet ist.

Zur Lösung dieser Aufgabe wird erfindungsgemäß zur Verfügung gestellt Aufsteller zur Aufstellung von wenigstens einem Solarmodul auf einem Untergrund, wobei der Aufsteller die folgenden Merkmale umfasst:
einen Boden, der
eine im wesentlichen plattenförmige Gestalt mit
einer rechteckigen Außenkontur aufweist, wobei
die Außenkontur ein erstes Paar sich gegenüberliegender und parallel zueinander verlaufender Außenkanten des Bodens und ein zweites Paar sich gegenüberliegender und parallel zueinander verlaufender Außenkanten des Bodens umfasst, wobei das erste Paar der Außenkanten gebildet ist aus einer ersten Außenkante und einer dieser gegenüberliegenden und parallel zur ersten Außenkante verlaufenden zweiten Außenkante, und wobei
der Boden flächig auf einen ebenen Untergrund auflegbar ist;
eine erste Seitenwand, die
entlang der ersten Außenkante verläuft und
einen ersten Abschnitt der ersten Seitenwand umfasst, der sich beginnend an der ersten Außenkante vom Boden weg erstreckt;
eine zweite Seitenwand, die
entlang der zweiten Außenkante verläuft und
einen ersten Abschnitt der zweiten Seitenwand umfasst, der sich, bevorzugt beginnend an der zweiten Seitenkante, vom Boden weg erstreckt; wobei
sich der erste Abschnitt der ersten Seitenwand in einem Winkel im Bereich von 80 bis 100° vom Boden weg erstreckt.

Die Erfindung beruht insbesondere auf der überraschenden Erkenntnis, dass die Standsicherheit von Aufstellern bei angreifendem Wind insbesondere dadurch gefährdet sein kann, dass zwischen benachbarten Aufstellern ein Windkanal ausgebildet wird, in dem es zu einem Sogeffekt kommt. Dieser Windkanal zwischen benachbarten Aufstellern wird dadurch ausgebildet, dass Aufsteller gemäß dem Stand der Technik, insbesondere soweit diese als Kunststoffformteil ausgebildet sind, schräg nach außen verlaufende Seitenwände aufweisen, zwischen denen ein Luftkanal ausgebildet ist. Bei angreifendem Wind strömt dieser durch diesen Kanal und erzeugt einen Sogeffekt, der die Standsicherheit der Aufsteller gefährden kann. Um einen solchen Windkanal zwischen benachbarten Aufstellern vermeiden zu können, umfasst die erste Seitenwand einen ersten Abschnitt, der sich im Wesentlichen rechtwinklig vom Boden des Aufstellers weg erstreckt, nämlich in einem Winkel im Bereich von 80 bis 100°. Dies erlaubt es, benachbarte Aufsteller derart zueinander anzuordnen, dass zwischen diesen kein oder nur ein minimaler Luftspalt verbleibt, womit die Ausbildung des zuvor beschriebenen Windkanals und der damit verbundenen Gefahr eines Sogeffektes vermieden werden kann.

Der erfindungsgemäße Aufsteller umfasst einen Boden beziehungsweise einen Bereich, der den Boden des Aufstellers bildet. Der Boden weist eine im Wesentlichen plattenförmige Gestalt mit einer rechteckigen Außenkontur auf. Diese rechteckige Außenkontur umfasst ein erstes Paar sich gegenüberliegender und parallel zueinander verlaufender Außenkanten und ein zweites Paar sich gegenüberliegender und parallel zueinander verlaufender Außenkanten. Diese zwei Paar Außenkanten bilden die vier Außenkanten des rechteckigen Bodens des Aufstellers. Das erste Paar der Außenkanten ist gebildet aus einer ersten Außenkante und einer dieser gegenüberliegenden und parallel zur ersten Außenkante verlaufenden zweiten Außenkante.

Der Boden des Aufstellers ist flächig auf einen ebenen Untergrund auflegbar. Ein "ebener Untergrund" im Sinne der Erfindung ist ein ebener, sich horizontal erstreckender Untergrund. Bei einem solch ebenen Untergrund kann es sich beispielsweise um ein Flachdach oder einen sonstigen Untergrund handeln, auf dem ein Solarmodul über dem erfindungsgemäßen Aufsteller angeordnet werden soll.

Der Aufsteller weist eine erste Seitenwand und eine zweite Seitenwand auf.

Die erste Seitenwand verläuft entlang der ersten Außenkante des Bodens und umfasst einen ersten Abschnitt der ersten Seitenwand, der sich, beginnend an der ersten Außenkante, im Wesentlichen rechtwinklig vom Boden des Aufstellers weg erstreckt, nämlich in einem Winkel im Bereich von 80 bis 100° vom Boden weg erstreckt. Der erste Abschnitt der ersten Seitenwand weist bevorzugt eine im Wesentlichen plattenförmige Gestalt mit einer im Wesentlichen rechteckigen Außenkontur auf.

Wie zuvor ausgeführt besteht nun ein Kerngedanke der Erfindung darin, dass sich dieser erste Abschnitt der ersten Seitenwand im Wesentlichen rechtwinklig, nämlich in einem Winkel im Bereich von 80 bis 100° vom Boden weg erstreckt. Nach einer noch bevorzugteren Ausführungsform erstreckt sich der erste Abschnitt der ersten Seitenwand in einem Winkel im Bereich von 85 bis 95° vom Boden weg und noch bevorzugter in einem Winkel im Bereich von 87 bis 93° vom Boden weg. Indem die ersten Seitenwand einen solchen ersten Abschnitt umfasst, der sich im Wesentlichen rechtwinklig vom Boden des Aufstellers weg erstreckt, ermöglicht dies, zwei benachbarte erfindungsgemäße Aufsteller mit einander zugewandten ersten Seitenwänden derart nebeneinander aufzustellen, dass zwischen diesen nur ein minimaler Luftspalt verbleibt.

Nach einer bevorzugten Ausführungsform umfasst die erste Seitenwand einen zweiten Abschnitt, der sich bevorzugt an den ersten Abschnitt anschließt. Besonders bevorzugt schließt sich der zweite Abschnitt an dem zum Boden distalen Bereich des ersten Abschnitts an. Nach einer bevorzugten Ausführungsform geht der erste Abschnitt der ersten Seitenwand in einer Kante, also in einem Knick beziehungsweise in einer Knickkante, in den zweiten Abschnitt über. Der zweite Abschnitt der ersten Seitenwand kann insbesondere zur Anordnung von Solarmodulen oder zur Anordnung von Befestigungsmitteln zur Befestigung von Solarmodulen am Aufsteller dienen.

Die zweite Seitenwand verläuft entlang der zweiten Außenkante des Bodens und umfasst einen ersten Abschnitt der zweiten Seitenwand, der sich, bevorzugt beginnend an der zweiten Außenkante, vom Boden des Aufstellers weg erstreckt. Grundsätzlich kann sich der erste Abschnitt der zweiten Seitenwand in einem beliebigen Winkel vom Boden weg erstrecken. Bevorzugt kann jedoch vorgesehen sein, dass sich auch der erste Abschnitt der zweiten Seitenwand, ebenso wie der erste Abschnitt der ersten Seitenwand, im Wesentlichen rechtwinklig vom Boden des Aufstellers weg erstreckt, nämlich in einem Winkel im Bereich von 80 bis 100° vom Boden weg erstreckt. Der erste Abschnitt der zweiten Seitenwand weist bevorzugt eine im Wesentlichen plattenförmige Gestalt mit einer im Wesentlichen rechteckigen Außenkontur auf.

Nach einer bevorzugten Ausführungsform umfasst die zweite Seitenwand einen zweiten Abschnitt, der sich bevorzugt an den ersten Abschnitt der zweiten Seitenwand anschließt. Besonders bevorzugt schließt sich der zweite Abschnitt an dem zum Boden distalen Bereich des ersten Abschnitts an. Nach einer bevorzugten Ausführungsform geht der erste Abschnitt der zweiten Seitenwand in einer Kante, also in einem Knick beziehungsweise in einer Knickkante, in den zweiten Abschnitt über. Der zweite Abschnitt der zweiten Seitenwand kann insbesondere zur Anordnung von Solarmodulen oder zur Anordnung von Befestigungsmitteln zur Befestigung von Solarmodulen am Aufsteller dienen.

Ein wesentlicher Vorteil eines Bodens sowie einer ersten und zweiten Seitenwand, die jeweils eine im Wesentlichen plattenförmige Gestalt mit einer rechteckigen Außenkontur aufweisen, besteht insbesondere auch darin, dass der Aufsteller in diesem Fall besonders einfach als Kunststoffformteil ausgebildet ist, insbesondere mittels Tiefziehens. Besonders bevorzugt ist der erfindungsgemäße Aufsteller insoweit einstückig ausgebildet.

Nach einer besonders bevorzugten Ausführungsform ist der Aufsteller aus Kunststoff ausgebildet.

Nach einer besonders bevorzugten Ausführungsform ist der erfindungsgemäße Aufsteller als einstückiges Kunststoffformteil, besonders bevorzugt als einstückiges Kunststoff-Tiefziehteil ausgebildet. Bekanntermaßen ist ein Kunststoff-Tiefziehteil als einstückiges Kunststoffteil durch Tiefziehen hergestellt.

Der erste Abschnitt der ersten Seitenwand und der erste Abschnitt der zweiten Seitenwand des Aufstellers erstrecken sich bevorzugt zur gleichen Seite hin vom Boden des Aufstellers weg, so dass der Boden einfach flächig auf einen ebenen Untergrund auflegbar ist. Mit anderen Worten: Die erste Seitenwand und die zweite Seitenwand erstrecken sich jeweils "nach oben" vom Boden weg, wenn der Boden auf einen ebenen Untergrund aufgelegt ist.

Die erste Seitenwand und die zweite Seitenwand weisen bevorzugt jeweils eine Oberkante auf, die jeweils das zum Boden distale Ende der ersten und zweiten Seitenwand darstellen.

Bevorzugt verläuft die Oberkante der ersten Seitenwand höher als die Oberkante der zweiten Seitenwand, wenn der Aufsteller auf einem ebenen Untergrund aufgestellt ist. Dies hat insbesondere den Vorteil, dass ein Solarmodul besonders einfach winklig zu einem Untergrund an dem Aufsteller befestigbar ist.

Nach einer bevorzugten Ausführungsform ist vorgesehen, dass eine gedachte Ebene, die zwischen der Oberkante der ersten Seitenwand und der Oberkante der zweiten Seitenwand verläuft, in einem Winkel im Bereich von 10 bis 15 Grad zum Untergrund verläuft, wenn der Aufsteller auf einem ebenen Untergrund aufgestellt ist. Dies ermöglicht es in besonders einfacher Weise, den Aufsteller zur Errichtung einer Solaranlage mit Ost-West-Ausrichtung von Solarmodulen zu verwenden.

Nach einer bevorzugten Ausführungsform weist der Aufsteller eine Profilierung auf, insbesondere eine U-förmige Profilierung, besonders bevorzugt mehrere parallel zueinander verlaufende, insbesondere U-förmige, Profilierungen. Hierdurch kann die Steifigkeit des Aufstellers wesentlich verbessert werden. Bevorzugt erstrecken sich die Profilierungen zwischen der ersten Seitenwand und der zweiten Seitenwand und verlaufen bevorzugt rechtwinklig zu diesen. Hierdurch kann dem Aufsteller eine besonders hohe Steifigkeit verliehen werden. Nach einer besonders bevorzugten Ausführungsform umfasst der erfindungsgemäße Aufstellkörper eine solche Profilierung in Form von Versteifungsrippen, die bevorzugt von der ersten Seitenwand zur zweiten Seitenwand verlaufen.

Nach einer besonders bevorzugten Ausführungsform weist der Aufsteller eine rinnenförmige Gestalt auf. Insoweit unterscheidet sich der Aufsteller von aus dem Stand der Technik bekannten Aufstellern in Form von Kunststoffformteilen, die regelmäßig eine im Wesentlichen wannenförmige Gestalt aufweisen. Erfindungsgemäß wurde jedoch festgestellt, dass ein rinnenförmiger Aufsteller wesentliche Vorteile gegenüber einem wannenförmigen Aufsteller aufweist. So können rinnenförmige Aufsteller insbesondere derart in Längsrichtung nebeneinander angeordnet werden, dass diese einen durchgehenden Kanal bilden. Der durchgehende Kanal kann jedoch vorteilhaft zur Verlegung von Kabeln, Leitungen oder sonstigen Elementen einer Solaranlage dienen. Der erfindungsgemäße Aufsteller weist insoweit bevorzugt neben der ersten Seitenwand mit der zweiten Seitenwand keine weiteren Seitenwände auf. Nach einer besonders bevorzugten Ausführungsform verlaufen entlang des zweiten Paars sich gegenüberliegender und parallel zueinander verlaufender Außenkanten des Bodens keine Seitenwände.

Erfindungsgemäß wurde festgestellt, dass die Steifigkeit des Aufstellers, insbesondere soweit dieser als einstückiges Kunststoffformteil und insbesondere, wie zuvor ausgeführt, rinnenförmig gestaltet ist, trotz einer etwaig vorhanden U-förmigen Profilierung eine optimierbare Steifigkeit aufweist. Erfindungsgemäß wurde festgestellt, dass die Steifigkeit des Aufstellers optimierbar ist, soweit dieser entlang seiner Außenkante in besonderer Weise gestaltet ist. Erfindungsgemäß wurde nun festgestellt, dass durch eine entlang der Außenkante des Aufstellers verlaufende Falz die Steifigkeit des Aufstellers, insbesondere, soweit dieser als einstückiges Kunststoffformteil ausgebildet ist, wesentlich verbessert werden kann. Nach einer besonders bevorzugten Ausführungsform ist daher vorgesehen, dass der Aufsteller eine entlang der Außenkante des Aufstellers verlaufende Falz aufweist. Diese Falz steht bevorzugt rechtwinklig von der Außenkante des Aufstellers ab. Bevorzugt weist diese Falz eine Höhe im Bereich von 1 bis 10 mm auf. Dies ermöglicht es, bei minimalem Materialeinsatz eine Optimierung der Steifigkeit des Aufstellers herzustellen.

Nach einer Ausführungsform umfasst der erfindungsgemäße Aufsteller wenigstens ein Solarmodul. Das wenigstens eine Solarmodul kann gemäß den aus dem Stand der Technik bekannten Solarmodulen ausgebildet sein.

Nach einer bevorzugten Ausführungsform umfasst der erfindungsgemäße Aufsteller ferner Befestigungsmittel zur Befestigung wenigstens eines Solarmoduls am Aufsteller, wobei diese Befestigungsmittel bevorzugt an der ersten Seitenwand und der zweiten Seitenwand angeordnet sind. Nach einer bevorzugten Ausführungsform sind Befestigungsmittel in Form von Metallschienen vorgesehen, die sich zwischen der ersten Seitenwand und der zweiten Seitenwand erstrecken.

Nach einer Ausführungsform umfasst der Aufsteller wenigstens ein Solarmodul, das über die Befestigungsmittel am Aufsteller befestigt ist.

Gegenstand der Erfindung ist auch ein Verfahren zur Anordnung von wenigstens einem Solarmodul an dem erfindungsgemäßen Aufsteller, wobei das Verfahren die folgenden Merkmale umfasst:
Zurverfügungstellung eines erfindungsgemäßen Aufstellers;
Zurverfügungstellung wenigstens eines Solarmoduls;
Auflegen des Bodens des Aufstellers auf einem ebenen Untergrund;
Befestigung des wenigstens einen Solarmoduls am Aufsteller.

Weitere Merkmale der Erfindung ergeben sich aus den Ansprüchen, den beigefügten Figuren und der zugehörigen Figurenbeschreibung.

Sämtliche Merkmale der Erfindung können, einzeln oder in Kombination, beliebig miteinander kombiniert sein.

In den Figuren wird ein Ausführungsbeispiel der Erfindung näher erläutert.

### Dabei zeigt:

- Figur 1: eine Ausführungsform eines erfindungsgemäßen Aufstellers in einer perspektivischen Ansicht von schräg oben;
- Figur 2: den Aufsteller nach Figur 1 in einer seitlichen Ansicht;
- Figur 3: den Aufsteller nach Figur 1 in einer weiteren seitlichen Ansicht und

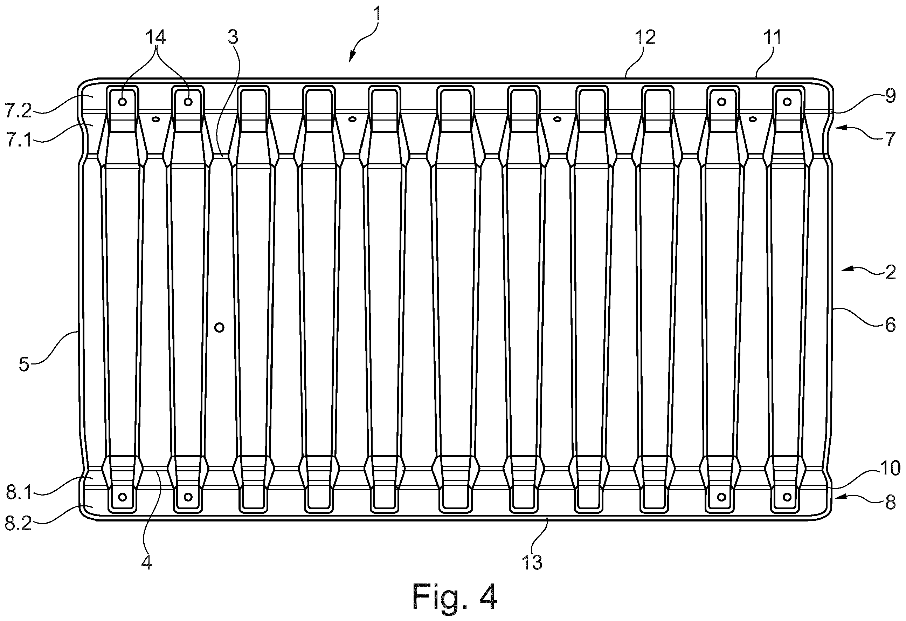

- Figur 4: den Aufsteller nach Figur 1 in einer Ansicht von oben.

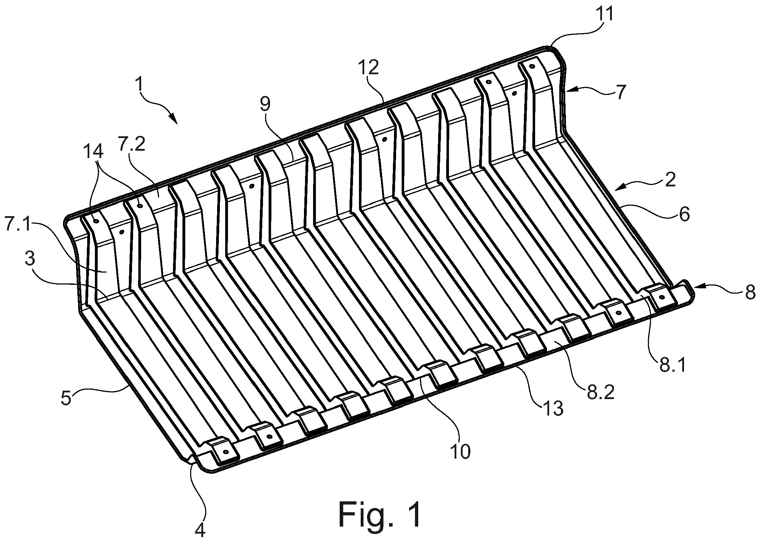

Der Aufsteller gemäß Figur 1 ist in seiner Gesamtheit mit dem Bezugszeichen 1 gekennzeichnet. Der Aufsteller 1 ist als einstückiges Kunststoff-Tiefziehteil ausgebildet. Der Aufsteller 1 umfasst einen Boden 2, der eine plattenförmige Gestalt mit einer rechteckigen Außenkontur aufweist. Die Außenkontur des Bodens 2 umfasst ein erstes Paar sich gegenüberliegender und parallel zueinander verlaufender Außenkanten 3 und 4 sowie ein zweites Paar sich gegenüberliegender und parallel zueinander verlaufender Außenkanten 5 und 6.

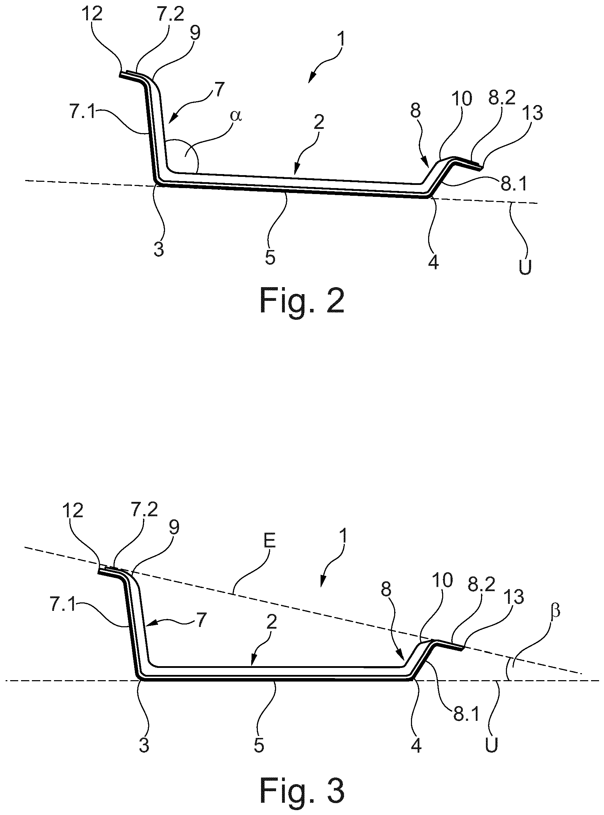

Der Boden 2 ist, wie sich insbesondere auch aus den Figuren 2 und 3 ergibt, flächig auf einen ebenen Untergrund U, angedeutet durch eine gestrichelte Linie, auflegbar.

Hinsichtlich des ersten Paars sich gegenüberliegender Außenkanten 3, 4 des Bodens 2, verläuft an der ersten Außenkante 3 eine erste Seitenwand 7 und an der zweiten Außenkante 4 eine zweite Seitenwand 8.

Die entlang der ersten Außenkante 3 verlaufende erste Seitenwand 7 verläuft entlang der gesamten ersten Außenkante 3. Die erste Seitenwand 7 umfasst einen ersten Abschnitt 7.1 und einen zweiten Abschnitt 7.2. Der erste Abschnitt 7.1 der ersten Seitenwand 7 geht entlang einer Knickkante 9 in den zweiten Abschnitt 7.2 der ersten Seitenwand 7 über. Das freie Ende des zweiten Abschnitts 7.2 ist das zum Boden 2 distale Ende der ersten Seitenwand 7 und bildet deren Oberkante 12. Die Oberkante 12 verläuft parallel zur ersten Außenkante 3. Sowohl der ersten Abschnitt 7.1 als auch der zweite Abschnitt 7.2 der ersten Seitenwand 7 weisen jeweils eine im Wesentlichen plattenförmige Gestalt mit einer rechteckigen Außenkontur auf.

Die entlang der zweiten Außenkante 4 verlaufende zweite Seitenwand 8 verläuft entlang der gesamten zweiten Außenkante 4. Die zweite Seitenwand 8 umfasst einen ersten Abschnitt 8.1 und einen zweiten Abschnitt 8.2. Der erste Abschnitt 8.1 der zweiten Seitenwand 8 geht entlang einer Knickkante 10 in den zweiten Abschnitt 8.2 der zweiten Seitenwand 8 über. Das freie Ende des zweiten Abschnitts 8.2 ist das zum Boden 2 distale Ende der zweiten Seitenwand 8 und bildet deren Oberkante 13. Die Oberkante 13 verläuft parallel zur zweiten Außenkante 4. Sowohl der ersten Abschnitt 8.1 als auch der zweite Abschnitt 8.2 der zweiten Seitenwand 8 weisen jeweils eine im Wesentlichen plattenförmige Gestalt mit einer rechteckigen Außenkontur auf.

Der zweite Abschnitt 7.1 der ersten Seitenwand 7 als auch der zweiten Abschnitt 8.2 der zweiten Seitenwand 8 ist jeweils nach außen, also vom Aufsteller 1 wegweisend, abgewinkelt, was die Anordnung von Befestigungsmitteln (nicht dargestellt) oder Solarmodulen (nicht dargestellt) am Aufsteller 1 erleichtert.

Wie sich insbesondere aus den Figuren 2, 3 ergibt, erstreckt sich der erste Abschnitt 7.1 der ersten Seitenwand 7 nahezu rechtwinklig vom Boden 2 weg, wobei der erste Abschnitt 7.1 und der Boden 2 einen Winkel α von etwa 93° einschließen. Bei Auflage des Bodens 2 auf einen ebenen Untergrund U, wie in den Figuren 2, 3 dargestellt, erstreckt sich der erste Abschnitt 7.1 der ersten Seitenwand 7 damit zunächst fast vertikal nach oben beziehungsweise rechtwinklig vom Untergrund U nach oben weg und der sich daran anschließende zweite Abschnitt 7.2 an der Knickkante 9 nach außen weg. Dies ermöglicht es, einen zum Aufsteller 1 benachbarten Aufsteller, der bevorzugt entsprechend dem im Ausführungsbeispiel beschriebenen Aufsteller ausgebildet sein kann, im Wesentlichen unmittelbar benachbart zum Aufsteller 1 anzuordnen, insbesondere mit einander jeweils zugewandten ersten Seitenwänden 7. Durch den sich jeweils im Wesentlichen rechtwinklig vom Boden 2 beziehungsweise vertikal vom Untergrund U weg erstreckende ersten Abschnitt 7.1 der ersten Seitenwand 7 wird zwischen diesen dadurch nur ein minimaler Spalt beziehungsweise Kanal ausgebildet, wodurch die Sogwirkung bei Windlast erheblich reduziert werden kann.

Entsprechend erstreckt sich der erste Abschnitt 8.1 der zweiten Seitenwand 8 nahezu rechtwinklig vom Boden 2 weg, wobei der erste Abschnitt 8.1 und der Boden 2 einen Winkel von etwa 93° einschließen. Bei Auflage des Bodens 2 auf einen ebenen Untergrund U, wie in den Figuren 2, 3 dargestellt, erstreckt sich der erste Abschnitt 8.1 der zweiten Seitenwand 8 damit zunächst fast vertikal nach oben beziehungsweise rechtwinklig vom Untergrund U nach oben weg und der sich daran anschließende zweite Abschnitt 8.2 an der Knickkante 10 nach außen weg.

Der Aufsteller 1 umfasst U-förmige Profilierungen in Form von Versteifungsrippen, die parallel zueinander von der ersten Seitenwand 7 zur zweiten Seitenwand 8 verlaufen.

Wie aus den Figuren 2 und 3 ersichtlich, verläuft die Oberkante 12 der ersten Seitenwand 7 höher als die Oberkante 13 der zweiten Seitenwand 8, wobei eine gedachte Ebene E, angedeutet durch eine gestrichelte Linie in Figur 3, die zwischen den Oberkanten 12 und 13 verläuft, in einem Winkel β von 12° zum Untergrund U verläuft.

Wie sich aus den Figuren ergibt, verlaufen entlang des zweiten Paars sich gegenüberliegender Außenkanten 5, 6 keine Seitenwände, so dass der Aufsteller 1 insgesamt eine rinnenförmige Gestalt aufweist.

Der Aufsteller 1 weist eine entlang seiner gesamten Außenkante verlaufende Falz 11 auf. Diese Falz 11 steht rechtwinklig von der Außenkante des Aufstellers 1 nach oben ab. Die Falz 11 weist eine Höhe von 5 mm auf.

Im Bereich der ersten Seitenwand 7 und der zweiten Seitenwand 8 sind mehrere Löcher beziehungsweise Öffnungen 14 am Aufsteller 1 angeordnet. Mittels dieser Löcher 14 können Befestigungsmittel (nicht dargestellt) oder Solarmodule (nicht dargestellt) einfach am Aufsteller 1 angeordnet werden.

## Patentansprüche

1. Aufsteller (1) zur Aufstellung von wenigstens einem Solarmodul auf einem Untergrund (U), wobei der Aufsteller (1) die folgenden Merkmale umfasst:
1.1 einen Boden (2), der
1.1.1 eine im wesentlichen plattenförmige Gestalt mit
1.1.2 einer rechteckigen Außenkontur aufweist, wobei
1.1.3 die Außenkontur ein erstes Paar sich gegenüberliegender und parallel zueinander verlaufender Außenkanten (3, 4) des Bodens (2) und ein zweites Paar sich gegenüberliegender und parallel zueinander verlaufender Außenkanten (5, 6) des Bodens (2) umfasst, wobei das erste Paar der Außenkanten (3, 4) gebildet ist aus einer ersten Außenkante (3) und einer dieser gegenüberliegenden und parallel zur ersten Außenkante (3) verlaufenden zweiten Außenkante (4), und wobei
1.1.4 der Boden (2) flächig auf einen ebenen Untergrund (U) auflegbar ist;
1.2 eine erste Seitenwand (7), die
1.2.1 entlang der ersten Außenkante (3) verläuft und
1.2.2 einen ersten Abschnitt (7.1) der ersten Seitenwand (7) umfasst, der sich beginnend an der ersten Außenkante (3) vom Boden (2) weg erstreckt;
1.3 eine zweite Seitenwand (8), die
1.3.1 entlang der zweiten Außenkante (4) verläuft und
1.3.2 einen ersten Abschnitt (8.1) der zweiten Seitenwand (8) umfasst, der sich vom Boden (2) weg erstreckt; wobei
1.4 sich der erste Abschnitt (7.1) der ersten Seitenwand (7) in einem Winkel im Bereich von 80 bis 100° vom Boden (2) weg erstreckt.

2. Aufsteller (1) nach Anspruch 1 der einstückig ausgebildet ist.

3. Aufsteller (1) nach wenigstens einem der vorhergehenden Ansprüche, der aus Kunststoff ausgebildet ist.

4. Aufsteller (1) nach wenigstens einem der vorhergehenden Ansprüche der als einstückiges Kunststofftiefziehteil ausgebildet ist.

5. Aufsteller (1) nach wenigstens einem der vorhergehenden Ansprüche, wobei die Oberkante (12) der ersten Seitenwand (7) höher verläuft als die Oberkante (13) der zweiten Seitenwand (8), wenn der Aufsteller (1) auf einem ebenen Untergrund (U) aufgestellt ist.

6. Aufsteller (1) nach wenigstens einem der vorhergehenden Ansprüche, wobei eine gedachte Ebene (E), die zwischen der Oberkante (12) der ersten Seitenwand (7) und der Oberkante (13) der zweiten Seitenwand (8) verläuft, in einem Winkel im Bereich von 10 bis 15° zum Untergrund (U) verläuft, wenn der Aufsteller (1) auf einem ebenen Untergrund (U) aufgestellt ist.

7. Aufsteller (1) nach wenigstens einem der vorhergehenden Ansprüche, umfassend Versteifungsrippen.

8. Aufsteller (1) nach wenigstens einem der vorhergehenden Ansprüche, wobei die Versteifungsrippen von der ersten Seitenwand (7) zur zweiten Seitenwand (8) verlaufen.

9. Aufsteller (1) nach wenigstens einem der vorhergehenden Ansprüche, umfassend eine entlang der Außenkontur des Aufstellers (1) verlaufende Falz (11).

10. Aufsteller (1) nach wenigstens einem der vorhergehenden Ansprüche, wobei entlang des zweiten Paars sich gegenüberliegender und parallel zueinander verlaufender Außenkanten (5, 6) des Bodens (2) keine Seitenwände verlaufen.

11. Aufsteller (1) nach wenigstens einem der vorhergehenden Ansprüche, ferner umfassend wenigstens ein Solarmodul.

12. Aufsteller (1) nach Anspruch 11, ferner umfassend Befestigungsmittel zur Befestigung wenigstens eines Solarmoduls am Aufsteller.

13. Aufsteller (1) nach Anspruch 12, wobei die Befestigungsmittel an der ersten Seitenwand (7) und an der zweiten Seitenwand (8) angeordnet sind.

14. Aufsteller (1) nach Anspruch 11 und wenigstens einem der Ansprüche 12 bis 13, wobei das Solarmodul über die Befestigungsmittel am Aufsteller (1) befestigt ist.

15. Verfahren zur Anordnung von wenigstens einem Solarmodul (100) an einem Aufsteller (1) nach wenigstens einem der vorhergehenden Ansprüche, wobei das Verfahren die folgenden Merkmale umfasst:
A. Zurverfügungstellung eines Aufstellers (1) nach wenigstens einem der vorhergehenden Ansprüche;
B. Zurverfügungstellung wenigstens eines Solarmoduls;
C. Auflegen des Bodens des Aufstellers (1) auf einem Untergrund (U);
D. Befestigung des wenigstens einen Solarmoduls am Aufsteller (1).
